Europäisches Patentamt

European Patent Office

Office européen des brevets

(11) Publication number: **0 039 149**
B1

(12) **EUROPEAN PATENT SPECIFICATION**

(45) Date of publication of patent specification: **25.07.84**

(51) Int. Cl.³: **A 44 C 11/02**

(21) Application number: **81301487.5**

(22) Date of filing: **07.04.81**

(54) Link for jewellery.

(30) Priority: **30.04.80 ES 250387**

(43) Date of publication of application:
**04.11.81 Bulletin 81/44**

(45) Publication of the grant of the patent:
**25.07.84 Bulletin 84/30**

(84) Designated Contracting States:
**AT BE CH DE FR GB IT LI LU NL SE**

(56) References cited:
**CH - A - 426 333**
**FR - A - 1 257 187**
**GB - A - 1 245 296**
**US - A - 3 905 069**
**US - A - 3 950 828**

(73) Proprietor: **Mendoza, Luis Mones**
**Guillermo Tell, 47**
**Barcelona 6 (ES)**

(72) Inventor: **Mendoza, Luis Mones**
**Guillermo Tell, 47**
**Barcelona 6 (ES)**

(74) Representative: **Mosey, Stephen George et al,**
**Marks & Clerk Alpha Tower Suffolk Street**
**Queensway**
**Birmingham B1 1TT (GB)**

Courier Press, Leamington Spa, England.

# Description

This invention relates to a link for jewellery of the type defined in the pre-characterising portion of claim 1.

A major problem faced by manufacturers of chains, pendants, necklaces and bracelets is undoubtedly that of the closure. It is believed that without doubt, the majority of the losses of bracelets, necklaces and chains are due to malfunctioning of the closure.

The closure most commonly known and used in jewellery is that constituted by a gapped ring having a tubular cross-section, to which is welded a ring which is solidly fixed to one of the terminals of the article of jewellery, and a lock acting along the interior of the tubular body and having an activating pivot protruding outwardly through a notch provided in the gapped ring. The lock is urged by a spring to a position in which it closes the gap existing between the ends of said gapped ring. Movement of the activating pivot against the spring opens said gap and allows the ring of the opposite end of the article of jewellery to be engaged with said gapped ring. Release of the activating pivot causes said lock to close said gap and thus retain said opposite end engaged with said ring.

This type of closure is not safe and although its disadvantage is known by all jewellers and, in general, by the user, it is still being manufactured and used for the sole reason that an improved replacement closure has not as yet been found.

The existence of this serious problem has lead to closures having various forms being designed which, although in the majority of the cases perferctly comply with their function, are expensive and extremely difficult to manufacture.

French Patent Specification No. 1257187 shows a jewellery closure in the form of a gapped ring to which is pivotally engaged a catch movable from a closed position, in which it closes the gap in said member, to an open position, in which said gap is open.

In a first embodiment a generally diagonally arranged member containing a compression spring forms the catch, with the spring forcing a ball against the interior surface of the ring. In the closed position of the catch, the ball closes the gap in the ring. By pressing the ball against the spring the catch can be pivoted to either side of the gap to allow a link to be engaged with or disengaged from the closure.

In a second embodiment the catch has a peg at its one end which in the closed position of the catch blocks the gap. The gap is defined between the free ends of a pair of leaf springs of the ring and the catch can be pivoted to either side of the gap by flexing the spring and thereby opening the gap.

However these arrangements do not satisfy the need for a closure which is of simple construction and is easy and relatively inexpensive to manufacture.

The object of the invention is thus to provide a link for jewellery which can join together the ends of an article of jewellery in an effective manner, so that the possibility of an end of the article of jewellery becoming detached, due to wear of the link or by accident, is reduced or eliminated.

According to the present invention there is provided a link for jewellery comprising a gapped member of ring-like form on which is engaged a catch movable from a closed position, in which it closes the gap in said member, to an open position, in which said gap is open, characterized in that said gapped member comprises a curved leaf spring, opposite ends of which are formed as open rings from which extend respective flexible curved arms whose free ends are spaced apart to form said gap, said arms being curved in respective directions opposite to the curvature of the leaf spring, said leaf spring being thicker at its mid-point than at its ends and having a notch at said thicker mid-point in which part of said catch is engaged so that, in use, said catch can be pivoted about said notch from said closed position, in which it closes said gap and engages each arm, to said open position engaging one arm, in which a link of an article of jewellery can be engaged with or disengaged from said gapped member.

The invention will now be described, by way of example, with reference to the accompanying drawings, in which:

Figures 1 and 2 are respective perspective views of the two components which constitute a link for jewellery constructed in accordance with the present invention;

Figure 3 shows a stage in the production of the catch component of the link shown in Figure 2;

Figure 4 is a perspective view showing how the link is used to connect together two ends of an article of jewellery; and

Figure 5 shows how one end of the jewellery article can be engaged with or disengaged from the link.

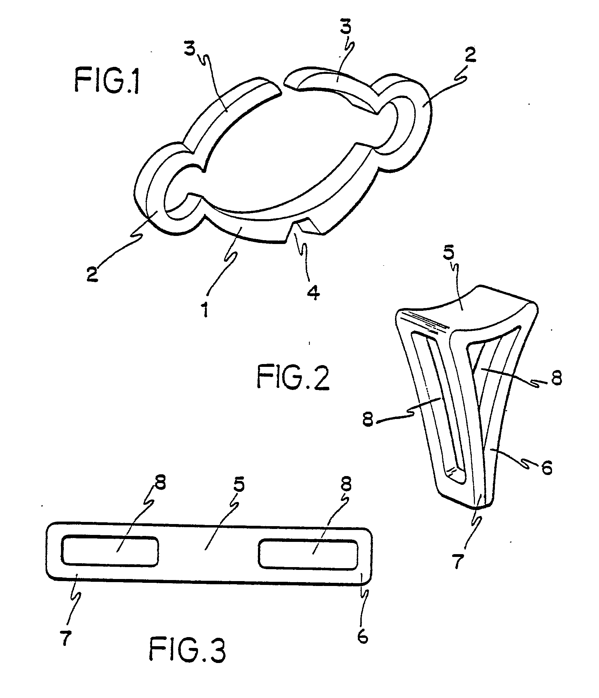

Figure 1 shows one component of the link of the invention, this component being readily produced in one piece by die stamping which, acting on the strip of rolled material, operates automatically without the need for manual labour and at a rate sufficiently superior to 60 pieces per minute.

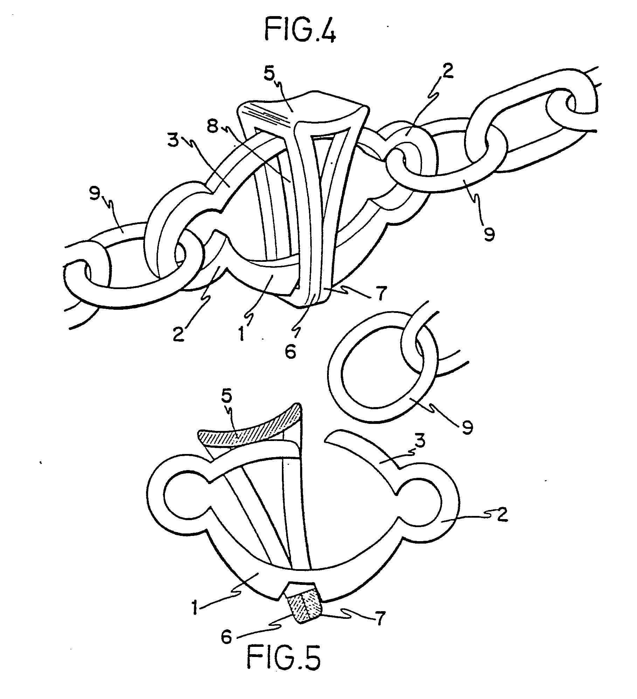

The component of Figure 1 comprises a curved leaf spring 1 which is thicker at its mid-point than at its ends and has a notch 4 cut in its convex surface at said mid-point. The ends of the leaf spring 1 are formed into open rings 2 to receive in use, the respective end links 9 of the article of jewellery to be fastened by the link as shown in Figure 4. From the open rings 2 extend arms in the form of leaf springs forming flexible arms 3, each of which is curved in the opposite direction to the curvature of the leaf spring 1, so that the concave surfaces of the arms 3 face the concave surface of the spring 1.

The respective free ends of the arms 3 terminate adjacent each other, but are spaced apart by a small gap, shown best in Figure 1.

The notch 4 has a flat base and outwardly diverging straight sides and is provided for the reception of part of a pivotable catch, shown in Figure 2. Advantageously the angle formed by the diverging sides of the notch is 90°.

The catch shown in Figure 2 is produced from a flat elongated plate, shown in Figure 3. Rectangular holes 8 are provided in the plate adjacent its opposite ends and the plate is then folded to form a pair of legs 6 and 7 having the holes 8 therein respectively, these legs extending from a central part 5. The ends of the legs 6 and 7 are juxtaposed to provide a combined width substantially equal to that of the notch 4, as can be seen from Figure 5. The holes 8 form a pair of openings within which the component of Figure 1 is intended to engage, as shown in Figure 4, with the central part 5 covering the gap between the free ends of the arms 3 and the ends of the legs 6 and 7 being fitted in the notch 4.

Each of the components shown in Figures 1 and 2 can be made from any of the noble materials commonly used in jewellery making, being perfectly integrated with the material constituting the jewellery.

Another important advantage is that the complete two-piece link is manufactured in a complete automatic manner without the intervention of hand labour and with such a high production rate that it permits the use of other materials, such as those used in imitation jewellery, without causing an increase in the total cost of the product, as is common with the closures existing on the market. The two pieces of the link can be produced at equal rates.

Figures 4 and 5 show how the link is used to connect together respective links 9 at the two ends of a piece of jewellery. With the catch engaged with the other link component as shown in Figure 4, a convex curved under the surface of the central part 5 engages the free ends of the arms 3. Due to the flexibility of the leaf spring 1 and arms 3, a force is developed which causes the catch to lock onto the other link component, with the central part 5 of the catch closing the gap between the free ends of the arms 3 and the ends of the legs 6 and 7 of the catch being engaged centrally within the notch 4. The position shown in Figure 4 is thus a rest or closed position of the catch.

Figure 5 shows how a link 9 at an end of a piece of jewellery can be engaged with or disengaged from one of the semi-rings 2. From its rest position, the catch is pivoted with the ends of its legs 6 and 7 being rocked towards one side of the notch. This moves the central part 5 of the catch fully onto one of the arms 3, thereby releasing the other arm and opening the gap between the free ends of said arms 3.

Accordingly a link 9 can be engaged with or removed from the open ring adjacent the released arm, by passing the link 9 through the open gap.

Meanwhile the other open ring remains inaccessible, since the catch is positioned diagonally, i.e. transversely thereto. Accordingly if a link 9 is to be engaged with or released from this other open ring, the catch must be pivoted in the opposite direction, so as to close access to the right hand open ring and open access to the left hand open ring, as viewed in Figure 5. The catch is then returned to its rest position.

The catch thus has three locking positions, namely the two pivoted positions allowing access to the respective open rings, and a rest position preventing access to either one. The catch can be moved manually between these positions.

Coupling between both pieces of the link is mechanically carried out using the tools and mechanical means necessary so that a sufficient force is developed which causes the leaf spring 1 and the arms 3 to be so flexibly deformed that they can be inserted through the holes 8, both pieces of the link thus being engaged together so that it is practically impossible to disengage them again manually.

It is important to point out that continuous mechanical production process ensures, besides a homogenity between all and each one of the pieces obtained, a constant production capacity with an absolute quality level.

It is also clear from the drawings that irrespective of the position of the catch, it is always transversely situated, ensuring the retention of the already coupled ring.

It should be emphasised as can be seen from the drawings, that the leaf spring 1 is thickened at its centre so that the section where the notch 4 is made does not weaken the assembly, maintaining the characteristics of resistance which guarantee the perfect retention and coupling of the end links 9 of the article of jewellery in question.

## Claims

1. A link for jewellery comprising a gapped member of ring-like form on which is engaged a catch movable from a closed position, in which it closes the gap in said member, to an open position, in which said gap is open, characterized in that said gapped member comprises a curved leaf spring (1), opposite ends of which are formed as open rings (2) from which extend respective flexible curved arms (3) whose free ends are spaced apart to form said gap, said arms being curved in respective directions opposite to the curvature of the leaf spring, said leaf spring being thicker at its midpoint than at its ends and having a notch (4) at said thicker mid-point in which part of said catch is engaged so that, in use, said catch can be pivoted about said notch from said closed position, in which it closes said gap and engages each arm, to said open position engaging one arm, in which a link (9) of an article of jewellery can be engaged with or disengaged from said gapped member.

2. Link for jewellery as claimed in claim 1, characterized in that the catch is formed from a flat elongated plate having openings (8) adjacent its opposite ends respectively, said plate being folded to form two like legs (6, 7) depending from a curved central portion (5), respective free ends of said legs being juxtaposed to produce a thickness which is equal or substantially equal to the depth of the notch (4) in said leaf spring (1), said folding of the plate also bringing said openings (8) into alignment in said legs (6, 7) respectively so that said gapped member can be passed through said openings (8) until said juxtaposed free ends of the legs (6, 7) engage in said notch and said central portion (5) engages on said flexible arms (3) thereby engaging said catch on said gapped member.

3. Link for jewellery as claimed in claim 2, characterized in that the the central portion (5) of the catch has a curved lower surface forming a point of retention between the ends of the curved flexible arms (3) which by combined flexure of the leaf spring (1) and the arms (3) produces a locking engagement, closing said gap between the free ends of the arms (3) when the catch is in a closed position.

4. Link for jewellery as claimed in any one of the preceding claims, characterized in that the sides of the notch (4) provided in the leaf spring (1) diverge outwardly facilitating the pivoting of the catch towards one arm (3) or the other, flexing it and opening the gap between the free ends of the arms (3), which gap when open allows the passage therethrough of an end link (9) of said article of jewellery.

5. Link for jewellery as claimed in any one of the preceding claims, characterized in that when the catch opens the gap between the free ends of the arms (3), it allows free access to one of the open rings (2) and is disposed in a diagonal position relative to the other open ring (2), thereby closing access to said other open ring.

6. Link for jewellery as claimed in claim 2 or any of claims 3 to 5 when appended to claim 2, characterized in that the catch has three locking positions between which it can be moved manually, the central locking butt being determined by the gap between the arms (3) together with the central part (5) of the catch, while the other two positions of free access to one open ring (2) or the other are determined by the sides of the notch (4) and the support of the catch by the open ring (2) opposite to that to which access is possible.

## Revendications

1. Maillon pour article de bijouterie qui comporte un élément brisé en forme d'anneau auquel est relié un verrou mobile à partir d'une position de fermeture, dans laquelle il ferme l'intervalle dudit élément, à une position d'ouverture, dans laquelle l'intervalle est ouvert, caractérisé en ce que ledit élément brisé est constitué par un ressort à lame courbé 1, dont les extrémités opposées ont la forme d'anneaux ouverts 2 à partir desquels partent des bras courbes flexibles respectifs 3, dont les extrémités sont séparées l'une de l'autre pour former ledit intervalle, ces bras étant courbés dans des directions respectives opposées à la direction de la courbure du ressort à lame, ce ressort à lame étant plus épais à sa partie centrale qu'à ses extrémités et étant doté dans sa partie centrale plus épaisse d'une entaille 4 dans laquelle pénètre une partie du verrou, de telle façon que, lorsque l'on utilise le maillon, le verrou puisse pivoter autour de cette entaille à partir de la position de fermeture dans laquelle il ferme l'intervalle et il est relié à chaque bras, à la position d'ouverture dans laquelle il est relié à un bras, et dans laquelle il est possible de relier à l'élément brisé en question un maillon 9 d'un article de bijouterie ou de séparer ce dernier de cet élément brisé.

2. Maillon pour article de bijouterie selon la revendication 1, caractérisé en ce que le verrou est réalisé à partir d'une pièce plate de forme allongée pourvue d'ouvertures 8 adjacentes à ses extrémités opposées respectives, cette pièce étant pliée pour former deux pattes identiques 6, 7 partant d'une partie centrale courbée 8, les extrémités libres respectives de ces pattes étant juxtaposées pour produire une épaisseur égale ou substantiellement égale à la profondeur de l'entaille 4 formée dans le ressort à lame 1, ce pliage de la pièce alignant également les ouvertures 8 formées dans les pattes 6, 7, respectivement, de telle façon que l'élément brisé puisse passer à travers ces ouvertures 8 pour que les extrémités libres juxtaposées des pattes 6, 7, pénètrent dans l'entaille et pour que la partie centrale 5 se situe sur les bras flexibles 3, en reliant ainsi le verrou à l'élément brisé en question.

3. Maillon pour article de bijouterie selon la revendication 2, caractérisé en ce que la partie centrale 5 du verrou présente une surface inférieure courbée qui constitue un point de retenue entre les extrémités des bras flexibles courbes 3, qui, au moyen de la flexion combinée du ressort à lame 1 et des bras 3, produit une liaison de blocage, qui ferme l'intervalle formé entre les extrémités libres des bras 3 lorsque le verrou est en position de fermeture.

4. Maillon pour article de bijouterie selon l'une quelconque des revendications précédentes, caractérisé en ce que les côtés de l'entaille 4 formée dans le ressort à lame 1 divergent vers l'extérieur pour faciliter le pivotement du verrou vers l'un ou l'autre des bras 3, en les déformant par flexion et en ouvrant l'intervalle entre les extrémités libres des bras 3, lequel, lorsqu'il est ouvert, permet le passage d'un maillon d'extrémité 9 de l'article de bijouterie en question.

5. Maillon pour article de bijouterie selon l'une quelconque des revendications précédentes, caractérisé en ce que lorsque le verrou ouvre l'intervalle formé entre les extrémités libres des bras 3, il permet le libre accès à l'un des anneaux ouverts 9 et il se situe en position diagonale par rapport à l'autre anneau ouvert 2, en interdisant ainsi l'accès à l'autre anneau ouvert en question.

6. Maillon pour article de bijouterie selon la revendication 2 ou selon l'une quelconque des revendications 3 à 5, dans la mesure dans laquelle elles dépendent de la revendication 2, caractérisé en ce que le verrou présente trois positions de blocage entre lesquelles il peut être déplacé à la main, la position de blocage central étant déterminée par l'intervalle entre les bras 3 conjointement à la partie centrale 5 du verrou, tandis que les deux autres positions qui permettent d'accéder librement à l'un des deux anneaux ouverts 2 sont déterminées par les côtés de l'entaille 4 et par le fait que le verrou est supporté par l'anneau ouvert 2 opposé à celui auquel l'accès est possible.

**Patentansprüche**

1. Ein Kettenglied eines Schmuckstrückes, das ein gespaltenes, ringförmiges Glied enthält, an welchem ein Haken befestigt ist, der sich von einer geschlossenen Stellung aus, in welcher dieser den Spalt in dem besagten Glied schliesst, in eine offene Stellung bewegt, in welcher der besagte Spalt offen ist,—ist dadurch gekennzeichnet, dass das besagte gespaltene Glied eine gebogene Blattfeder (1) besitzt, deren sich gegenüberliegenden Enden wie offene Ringe (2) geformt sind, von welchen jeweils flexible, gebogene Arme (3) ausgehen, deren freie Enden in die entgegengesetzte Richtung der Biegung der Blattfeder gekrümmt sind, wobei die besagte Blattfeder an ihrem mittleren Bereich dicker ist als an ihren Enden und eine Kerbe (4) an dem besagten dickeren, mittleren Teil hat, in welche der besagte Haken eingehakt ist, so das im Gebrauch der besagte Haken ueber die besagte Kerbe von der besagten geschlossenen Stellung, in welcher er den besagten Spalt schliesst und jeden einzelnen Arm festhakt, in die geöffnete Stellunggeschwenkt wird, indem er einen Arm festhakt, in welchem ein Kettenglied (9) von eines Schmuckstücks befestigt oder von dem besagten gespaltenen Glied gelöst werden kann.

2. Ein Kettenglied fuer ein Schmuckstück, wie in Patentanspruch 1 beansprucht, ist gekennzeichnet, dass der Haken von einer flachen, länglichen Platte gebildet wird, die an ihren jeweiligen gegenüberliegenden Enden Öffnungen (8) hat; dass diese Platte derart gebogen wird, dass sie zwei beinartige Formen (6, 7) bildet, die von einem gebogenen, zentralen Teil (5) abstehen; die jeweiligen freien Enden der besagten Beine zusammengedrückt sind und deren gemeinsame Dicke gleich oder hauptstächlich gleich der Tiefe der Spalte (4) in der besagten Blattfeder (1) ist; dass durch dans Biegen der Platte ebenfalls die gesagten Öffnungen (8) in den besagten Beinen (6, 7) in Fluchtlinie gebracht werden, so dass das besagte gespaltene Glied durch die besagten Öffnungen (8) geschoben werden kann, bis die besagten aneinandergedrückten freien Enden der Beine (6, 7) in die besagte Kerbe und der besagte mittlere Teil (5) in den besagten flexiblen Armen (3) einrasten, wodurch der besagte Haken auf dem besagten gespaltenen Glied einschnappt.

3. Ein Kettenglied für ein Schmuckstück, wie in Patentanspruch 2 beansprucht, ist dadurch gekennzeichnet, dass der mittlere Teil (5) des Hakens eine gebogene, untere Fläche hat, die einen Haltepunkt zwischen dem Enden der gebogenen flexiblen Arme (3) bildet, welcher durch gemeinsames Biegen der Blattfedder (1) und der Arme (3) eine Kuppelnden, schliessenden Effekt erzeugt, wobei der besagte Spalt zwischen den freien Enden der Arme (3) geschlossen wird, wenn der Haken in einer geschlossenen Stellung ist.

4. Ein Kettenglied für ein Schmuckstück, wie in den einzelnen, vorstehenden Patentansprüchen beansprucht, ist dadurch gekennzeichnet, dass die Seiten der Kerbe (4), die sich in der Blattfeder (1) befindet, sich nach aussen weiten und daher das Schwenken des Hakens hin zu dem einen oder dem anderen Arm (3) erleichtern, indem er diese biegt und den Spalt zwischen den freien Enden der Arme (3) öffnet; wenn dieser Spalt offen ist, kann dadurch ein Endglied (9) des besagten Schmuckstückes eingehakt werden.

5. Ein Kettenglied für ein Schmuckstück, wie in den einzelnen, vorstehenden Patantansprüchen beansprucht, ist dadurch gekennzeichnet, dass, wenn der Haken den Spalt zwischen den freien Enden der Arme (3) öffnet, er freien Zugang zu einem der offenen Ringe (2) erlaubt und in Bezug zu dem anderen offenen Ring (2) diagonal zu stehen kommt, wodurch er den Zugang zu dem besagten anderen offenen Ring schliesst.

6. Ein Kettenglied für ein Schmuckstück, wie in Patentanspruch 2 oder iregendeinem anderen der Ansprüche 3 bis 5 beansprucht, wenn sie Anspruch 2 angehängt werden, ist dadurch gekennzeichnet, dass der Haken drei Verschlusstellungen hat, zwischen welchen er manuell bewegt werden kann, wobei das mittlere, schliessende Stück durch den Spalt zwischen den Armen (3) und gleichzeitig den mittleren Teil (5) des Haken bestimmt wird, während die anderen beiden freien Zugangsstellungen hin zu dem einen offenen Ring (2) oder dem anderen durch die Seiten der Kerbe (4) und die Stütze des Hakens durch den offenen Ring (2), der dem gegenüberliegt, zu dem der Zugang frei ist, bestimmt werden.

FIG.1

3

3

3

2

2

1

4

FIG.2

5

8

8

6

7

FIG.3

8

5

8

7

6

# FIG.4

# FIG.5